(19)

**Europäisches Patentamt**
**European Patent Office**
**Office européen des brevets**

(11) **EP 4 029 151 B1**

(12) **EUROPEAN PATENT SPECIFICATION**

(45) Date of publication and mention
of the grant of the patent:
**21.05.2025 Bulletin 2025/21**

(21) Application number: **20885220.2**

(22) Date of filing: **09.11.2020**

(51) International Patent Classification (IPC):
$H04B\ 7/024^{(2017.01)}$     $H04B\ 7/06^{(2006.01)}$
$H04W\ 24/10^{(2009.01)}$     $H04W\ 84/12^{(2009.01)}$

(52) Cooperative Patent Classification (CPC):
**H04B 7/024; H04B 7/0626; H04W 24/10;**
**H04W 84/12**

(86) International application number:
**PCT/CN2020/127532**

(87) International publication number:
**WO 2021/089046 (14.05.2021 Gazette 2021/19)**

(54) **METHOD AND APPARATUS FOR CHANNEL STATE INFORMATION FEEDBACK FOR JOINT TRANSMISSION**

VERFAHREN UND VORRICHTUNG ZUR KANALZUSTANDSINFORMATIONSRÜCKKOPPLUNG FÜR GEMEINSAME ÜBERTRAGUNG

PROCÉDÉ ET APPAREIL POUR LA RÉTROACTION D'INFORMATION D'ÉTAT DE CANAL POUR LA TRANSMISSION CONJOINTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2019  US 201962932845 P**
**04.11.2020  US 202017089112**

(43) Date of publication of application:
**20.07.2022  Bulletin 2022/29**

(73) Proprietor: **Huawei Technologies Co., Ltd.**
**Longgang District,**
**Shenzhen, Guangdong**
**518129 (CN)**

(72) Inventors:
• **SUH, Jung Hoon**
**Kanata, Ontario K2W 0A8 (CA)**
• **XIN, Yan**
**Kanata, Ontario K2K 2R1 (CA)**
• **ABOUL-MAGD, Osama**
**Kanata, Ontario K2M 2K2 (CA)**

(74) Representative: **Pfenning, Meinig & Partner mbB**
**Patent- und Rechtsanwälte**
**Theresienhöhe 11a**
**80339 München (DE)**

(56) References cited:
**EP-A1- 3 817 240        WO-A1-2019/096429**
**CN-A- 107 148 763      US-A1- 2012 106 384**
**US-A1- 2012 106 384**

• **ALCATEL-LUCENT SHANGHAI BELL ET AL: "Weighted CSI Feedback aided DL CoMP transmissions", 3GPP DRAFT; R1-093782 WEIGHTED CSI FEEDBACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388302**

**(Cont. next page)**

- "Consideration on Aggregated CSI Feedback", 3GPP DRAFT; R1-113968 CONSIDERATION ON AGGREGATED CSI FEEDBACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco ,USA; 20111114 - 20111118, 9 November 2011 (2011-11-09), XP050562283
- HITACHI LTD.: "CQI Definition for CoMP", 3GPP DRAFT; R1- 114338 CQI DEFINITION FOR COMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20111114 - 20111118, 11 November 2011 (2011-11-11), Mobile Competence Centre ; 650, route des Lucioles ; F-06921 Sophia-Antipolis Cedex ; France, XP050562426
- YUN XIANG; YU JIANG; CHEN LAN; NAGATA SATOSHI: "Enhanced CSI feedback and update for downlink CoMP Joint Transmission", 2013 16TH INTERNATIONAL SYMPOSIUM ON WIRELESS PERSONAL MULTIMEDIA COMMUNICATIONS (WPMC), NICT, 24 June 2013 (2013-06-24), pages 1 - 5, XP032493951, ISSN: 1347-6890

## Description

## TECHNICAL FIELD

The present invention relates generally to the field of wireless communication systems, and in particular, to sounding protocols when using access point (AP) collaboration.

## BACKGROUND

Wireless local area network (WLAN) communication systems, such as the IEEE® 802.11 family of WiFi protocols, include wireless communication devices that transmit and receive signals, including access points (APs), that function as an interface between the WLAN and one or more further networks, and stations (STA) that are devices that support the 802.11 protocol and exchange signals with the APs.

Both APs and STAs may incorporate multiple-input multiple-output (MIMO) technology where the wireless communication devices has multiple antenna. This allows techniques such as beamforming to be used to increase the performance and throughput of the wireless network.

An AP uses sounding protocols to estimate the characteristics of the communication channel between antennas on the AP and antennas on STAs. Sounding packets are sent from the AP to the STA. The STA analyzes and evaluates the reception of the sounding packets, and information is fed back to the sending AP. The AP then utilizes this 'channel state information' (CSI) in configuring its transmissions to the STA.

In some cases, a plurality of APs may work in collaboration to communicate with one or more STAs in a WLAN. For example, the proposed IEEE 802.11be standard is being developed to support a next generation of Extremely High Throughput (EHT) WLAN. EHT communication may be achieved with AP collaboration, which can utilize coordination between multiple APs, and multiple antennas on APs, to minimize interference and improve quality of service for communications with STAs.

In some cases, a plurality of APs may work in collaboration to communicate with one or more STAs to achieve increased or improved throughput. AP collaboration may also serve to minimize interference and improve quality of service for communications with STAs.

However, existing sounding protocols may result in insufficiently accurate channel estimation when AP collaboration is used. Therefore there is a need for an improved method and apparatus for sounding protocols when using access point collaboration.

ALCATEL-LUCENT SHANGHAI BELL ET AL: "Weighted CSI Feedback aided DL CoMP transmissions", 3GPP Draft R1-093782, 12 October 2009, discusses the theoretical feasibility of weighted CSI feedback.

US 2012/106384 describes an apparatus and a system for transmitting channel state information, which acquires channel state information of a channel between a mobile terminal and two or more cooperative base stations.

"Consideration on Aggregated CSI Feedback", 3GPP Draft R1-113968, 9 November 2011, discusses the benefits and problems of aggregated CSI feedback scheme for TP cooperation.

This background information is provided to reveal information believed by the applicant to be of possible relevance to the present invention. No admission is necessarily intended, nor should be construed, that any of the preceding information constitutes prior art against the present invention.

## SUMMARY

An object of embodiments of the present invention is to provide a method and apparatus for sounding protocols when using AP collaboration. The scope of the present invention is set out by the appended claims.

In accordance with embodiments of the present invention, there is provided a method for determining channel state information (CSI) of a wireless channel by a station (STA). The method includes receiving a plurality of sounding data transmissions from a plurality of access points (APs) over a plurality of communication channels. Estimating, for each of the plurality of communication channels, a CSI of the channel based on the plurality of sounding data transmissions. Aggregating the CSI of each of the communication channels to produce an aggregated CSI, and transmitting the aggregated CSI to the plurality of APs, by aggregating the plurality of communication channels to produce an aggregated channel having an aggregated channel matrix; transforming the aggregated channel matrix using singular value decomposition to produce a $\Sigma$ matrix and a V matrix of the aggregated channel matrix, and transmitting the $\Sigma$ matrix and the V matrix to the plurality of APs.

In further embodiments, the plurality of sounding data transmissions are received serially.

In any of the above mentioned embodiments, the plurality of sounding data transmissions are received concurrently.

In any of the above mentioned embodiments, the aggregated matrix includes a measured gain and a measured phase of the plurality of sounding data transmissions.

In any of the above mentioned embodiments, the plurality of communication channels use an 802.11 WiFi protocol.

In any of the above mentioned embodiments, the 802.11 protocol includes multiple-input multiple-output (MIMO) protocols.

Any of the above mentioned embodiments further include determining that joint transmission is used by the plurality of APs over the plurality of communication channels.

In accordance with embodiments of the present invention, there is provided a method for determining channel state information (CSI) of a wireless channel by an access point (AP). The method includes transmitting a sounding data transmission to a plurality of stations (STAs) over a plurality of communication channels. Receiving, in response to the sounding data transmission, a Σ matrix and a V matrix pair from each of the plurality of STAs where each of the Σ matrix and the V matrix pair are produced through a singular value decomposition of a matrix of a channel estimated by each of the plurality of STAs. Reconstructing an aggregate matrix of the CSI based on the Σ matrix and the V matrix pair received from the plurality of STAs, and computing a precoder matrix based on the aggregate matrix.

In any of the above mentioned embodiments, the sounding data transmission is transmitted concurrent with a plurality of sounding data transmissions.

In any of the above mentioned embodiments, the sounding data transmission is transmitted in series with a plurality of sounding data transmissions.

Any of the above mentioned embodiments further include the AP communicating with one of the plurality of STAs using the precoder matrix with coordinated beam forming techniques.

Any of the above mentioned embodiments further include the AP communicating portions of a plurality of data streams with the plurality of STAs using the precoder matrix with joint transmission techniques.

In accordance with embodiments of the present invention, there is provided a station (STA) for communicating over a communications channel. The STA includes a processor and a non-transient memory for storing instructions which when executed by the processor cause the STA to perform the following: Receive a plurality of sounding data transmissions from a plurality of access points (APs) over a plurality of communication channels. Estimate, for each of the plurality of communication channels, a CSI of the channel based on the plurality of sounding data transmissions. Aggregate the CSI of each of the communication channels to produce an aggregated CSI, and transmit the aggregated CSI to the plurality of APs, by aggregating the plurality of communication channels to produce an aggregated channel having an aggregated channel matrix, transforming the aggregated channel matrix using singular value decomposition to produce a Σ matrix and a V matrix of the aggregated channel matrix, and transmitting the Σ matrix and the V matrix to the plurality of APs.

In any of the above mentioned embodiments, the plurality of sounding data transmissions are received serially.

In any of the above mentioned embodiments, the plurality of sounding data transmissions are received concurrently.

In any of the above mentioned embodiments, the aggregated matrix includes a measured gain and a measured phase of the plurality of sounding data transmissions.

In any of the above mentioned embodiments, the plurality of communication channels use an 802.11 WiFi protocol.

In any of the above mentioned embodiments, the 802.11 protocol includes multiple-input multiple-output (MIMO) protocols.

Any of the above mentioned embodiments further include determining that joint transmission is used by the plurality of APs over the plurality of communication channels.

Embodiments have been described above in conjunctions with aspects of the present invention upon which they can be implemented. Those skilled in the art will appreciate that embodiments may be implemented in conjunction with the aspect with which they are described, but may also be implemented with other embodiments of that aspect. When embodiments are mutually exclusive, or are otherwise incompatible with each other, it will be apparent to those skilled in the art. Some embodiments may be described in relation to one aspect, but may also be applicable to other aspects, as will be apparent to those of skill in the art.

**BRIEF DESCRIPTION OF THE FIGURES**

Further features and advantages of the present invention will become apparent from the following detailed description, taken in combination with the appended drawings, in which:

FIG. 1 illustrates a computing device that may be used in embodiments of the invention.

FIG. 2 illustrates a wireless network in which embodiments of the invention may be used.

FIG. 3 illustrates an embodiment with two APs and two STAs using coordinated beamforming techniques, according to an embodiment.

FIG. 4 illustrates an embodiment with two APs and two STAs using joint transmission techniques, according to an embodiment.

FIG. 5 illustrates a serial sounding procedure, according to an embodiment.

FIG. 6 illustrates a first concurrent sounding procedure, according to an embodiment.

FIG. 7 illustrates a second concurrent sounding protocol, according to an embodiment.

FIG. 8a illustrates CSI matrices of channel state information, according to an embodiment.

FIG. 8b illustrates two aggregated matrices of channel state information, according to an embodiment.

FIG. 9a illustrates the use of a precoder matrix using CBF techniques, according to an embodiment.

FIG. 9b illustrates the use of a precoder matrix using JT techniques, according to an embodiment.

FIG. 10 illustrates the calculation and use of a precoder matrix using CSI information aggregated in STAs and JT techniques, according to an embodiment.

It will be noted that throughout the appended drawings, like features are identified by like reference numerals.

## DETAILED DESCRIPTION

An object of embodiments of the present invention is to provide a method and apparatus for implementing sounding protocols when using access point (AP) collaboration.

Wireless networks typically include a number of end user stations, referred to as STAs, that are wirelessly connected to access points (APs) that provide access to a wider local-area network (LAN), wide-area network (WAN), the Internet, and any number of other wired and wireless networks as are known in the art. In many network topologies a single AP may service multiple STAs.

Examples of STAs include any wireless entity such as a cell phone, tablet, laptop computer, another AP, a vehicle, a beacon, and others.

Some of the most ubiquitous wireless networks are based on the IEEE 802.11 family of standards that define the protocols to be used for wireless communications. One of the more recent standards in the family of protocols is the 802.11be Extremely High Throughput (EHT). One of the features of 802.11be is known as Multi-Access Point (AP) coordination, where a STA can connect to multiple APs in order to optimize the wireless connection for speed, distance, signal to noise ratio (SNR), or other factors. Allowing for a STA to connect to multiple APs, or for an AP to connect to multiple STAs allows for multiple paths that may be used to optimize the connection of the STA, through APs, to the wider network.

Modern wireless STAs and APs also support multiple-input and multiple output (MIMO) technology, where each STA and AP may transmit and receive using multiple transmitting and receiving antennas. MIMO technology in the STA and AP allows them to use multistream transmissions in order to increase throughput, range, or both throughput and range. An additional benefit of the multiple antennas of MIMO configurations is that beamforming may be used to control the direction of the wireless transmissions leading to more improvements. With MIMO technology, the path between each antenna on an AP and each antenna on a STA may be optimized independently.

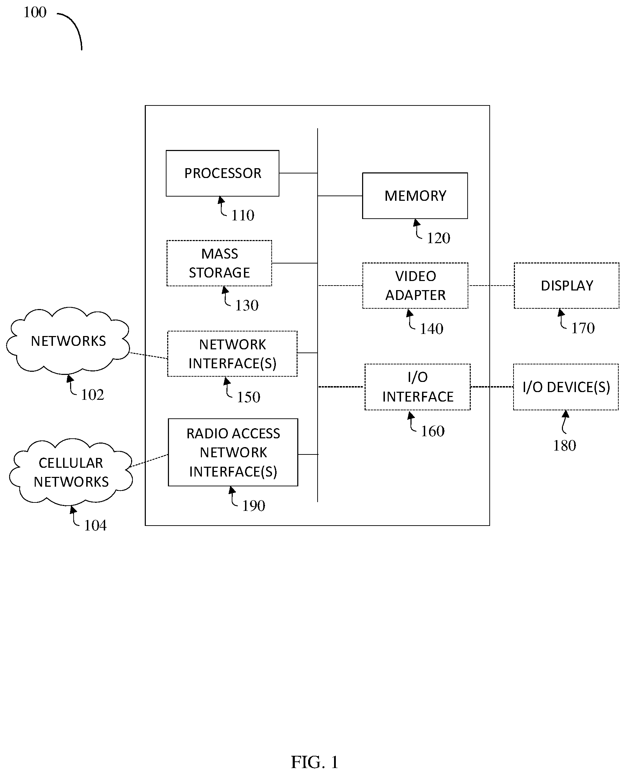

FIG. 1 is block diagram of a wireless communication device or system **100** that may be used for implementing STAs and APs utilizing the methods disclosed herein. Examples would be a cell phone, portable computer, tablet, wireless access point, etc. Specific devices 100 may utilize all of the components shown or only a subset of the components, and levels of integration may vary from device to device. Furthermore, a device may contain multiple instances of a component, such as multiple processing units, processors, memories, transmitters, receivers, etc. The device 100 includes a processing unit **110**. The processing unit **110** typically includes a processor, also known as a central processing unit (CPU) **110**, a bus and a memory **120**, and may optionally also include a mass storage device **130**, a video adapter **140**, and an I/O interface **160** (each shown in dashed lines to indicate they are optional). The device **100** may further include one or more network interface(s) **150** for connecting the device to communication networks **102** which may be wired networks or wireless networks such as IEEE 802.11 compatible wireless networks. The device **100** may further include one or more radio access network interface(s) **190** for connecting the computing system to cellular networks **104** which may be cellular networks such as 3G, 4G, LTE, 5G, etc.

The CPU **110** may comprise any type of electronic data processor, and may include one or more cores or processing elements. The memory **120** may comprise any type of non-transitory system memory such as static random access memory (SRAM), dynamic random access memory (DRAM), synchronous DRAM (SDRAM), read-only memory (ROM), or a combination thereof. In an embodiment, the memory may include ROM for use at boot-up, and DRAM for program and data storage for use while executing programs. The bus may be one or more of any type of several bus architectures including a memory bus or memory controller, a peripheral bus, or a video bus.

The mass storage **130** may comprise any type of non-transitory storage device configured to store data, programs, and other information and to make the data, programs, and other information accessible via the bus. The mass storage may comprise, for example, one or more of a solid state drive, hard disk drive, a magnetic disk drive, or an optical disk drive.

The video adapter **140** and the I/O interface **160** provide optional interfaces to couple external input and output devices to the processing unit. Examples of input and output devices include a display **170** coupled to the video adapter **140** and an I/O device **180** such as a touchscreen coupled to the I/O interface **1160**. Other devices may be coupled to the CPU **110**, and additional or fewer interfaces may be utilized. For example, a serial interface such as Universal Serial Bus (USB) (not shown) may be used to provide an interface for an external device. Alternatively, the computing system may rely upon the network interface(s) for connection to available mass storage(s), video adapter(s), and I/O interface(s) available on the networks.

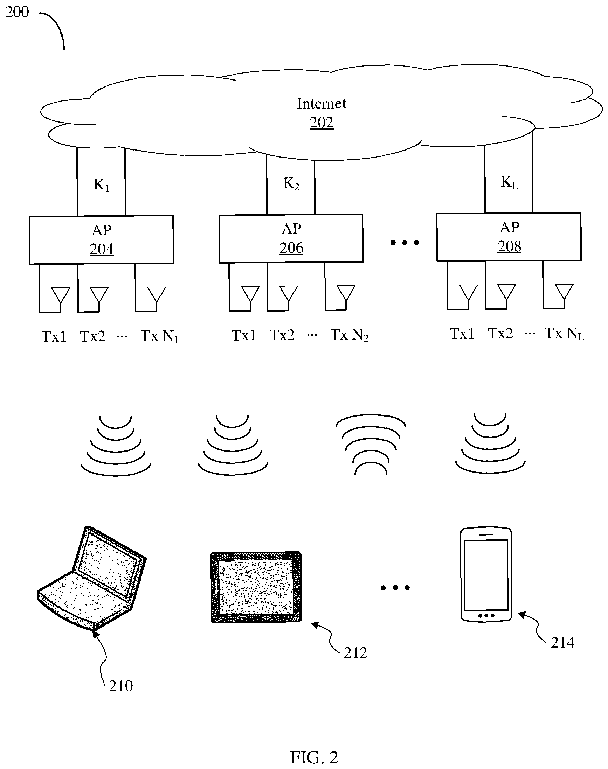

FIG. 2 illustrates an embodiment **200** of STAs wirelessly connecting to the Internet **202** through APs. $K_1$, $K_2$, ..., $K_L$ are data streams to be scheduled. It is understood that in other embodiments, the Internet **202** may be replaced by any other computer network that the STAs are configured to connect to. APs **204, 206, 208** are illustrative of a plurality of APs providing wireless network access in an area. In general, there may be L APs, where L is a positive integer. Each of the L APs has a MIMO architecture and in particular supports a number; $N_1$, $N_2$, ..., $N_L$ transmit antennas that may support MIMO technology including beamforming. Each of the L APs **204, 206, 208** is connected directly or indirectly to the Internet **202**. Three STAs are illustrated; a laptop computer **210,** a tablet **212,** and a cell phone **214.** Any arbitrary number of STAs may be supported in embodiments **200,** only limited by the area of coverage of the APs and the number of STAs that may affect the responsiveness and throughput capacity of the APs that may cause the service to a STA to degrade below acceptable limits. STAs connect to one or more APs in order to access the Internet.

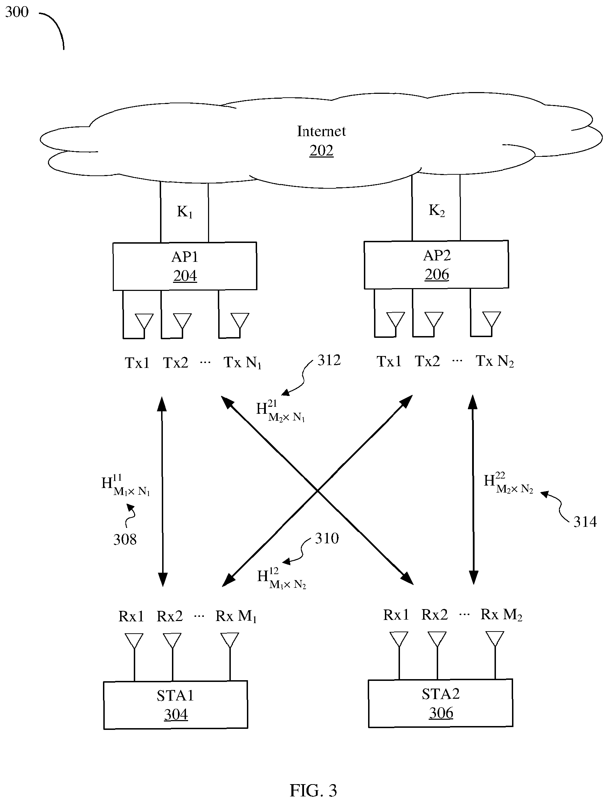

FIG. 3 illustrates a similar embodiment to FIG. 2, showing two APs and two STAs for illustrative purposes. STA1 **304** and STA2 **306** access AP1 **204** and AP2 **206** to gain access to the Internet **202.** AP1 **204** and AP2 **206** implement multi-AP coordination that enables the two STAs to connect to one or both APs.

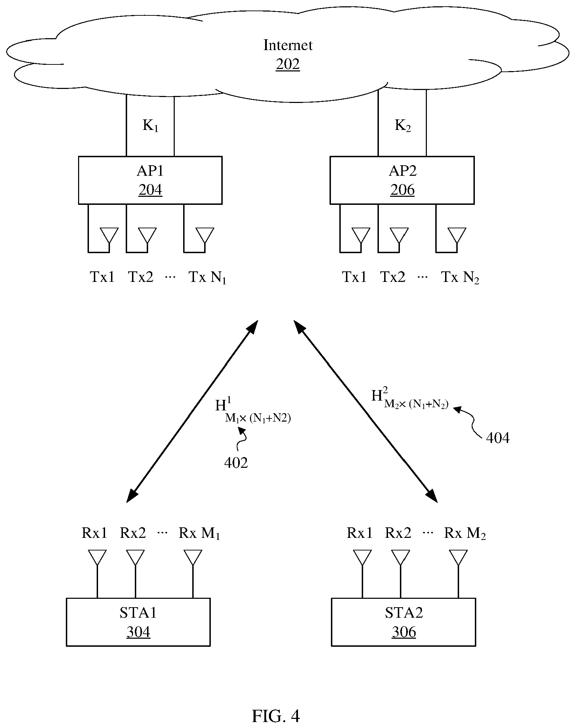

Multi-AP techniques include techniques known as "coordinated beam forming" (CBF) and "joint transmission" (JT). Using CBF techniques, STA1 304 may be scheduled to communicate with AP1 204, and STA2 306 may be scheduled to communicate with AP2 206. With reference to FIG. 4, using JT techniques, $K_1$ and $K_2$ streams of data are shared between AP1 204 and AP2 206 to communicate jointly with STA1 304 and STA2 306.

When using multi-AP coordination and beamforming, a calibration procedure known as 'sounding' is used to estimate wireless communications Channel State Information (CSI) between antennas on an AP and antennas on a STA. The CSI measurements are used to configure beamforming transmissions between the AP and the STA. In some sounding procedures, an AP transmits null data packets (NDPs) to STAs. Each STA that receives one or more NDP packets analyzes them to calculate or estimate the channel or channel responses to produce a feedback matrix for combinations of communications between the APs and STAs. In some embodiments, estimating the channel includes measuring the phase and gain of the received NDP or NDPs. Sounding adds overhead to the network but enables increased network performance that should outweigh the decrease in capacity due to the overhead. When using multi-AP coordination, the calculation of the CSI is performed by each STA. The CSI information from the STAs is then fed back to each AP. Each AP is responsible to aggregate information received from STAs to compute a precoder that may be used when a plurality of APs coordinate to perform a joint transmission (JT) to a STA or to communicate using CBF to scheduled STAs. The precoder is used by MIMO transmitters to determine the transmission parameters to use for each of their transmitting antennas.

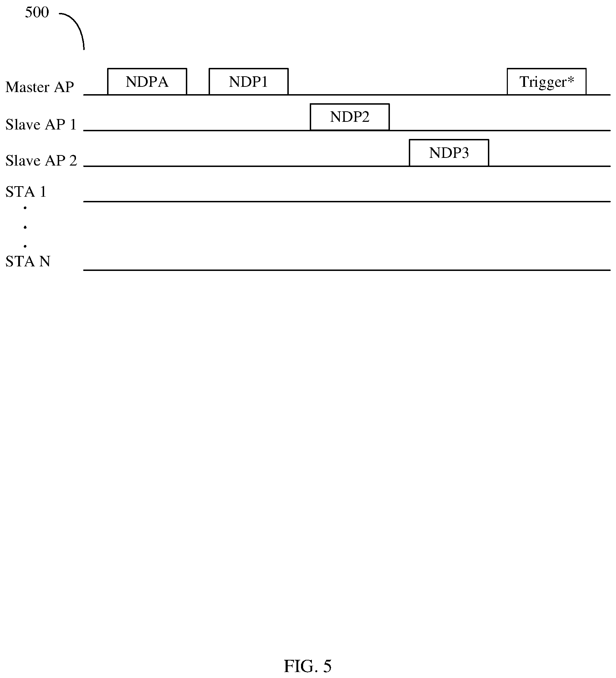

FIG. 5 illustrates a serial sounding procedure **500** according to an embodiment. A master AP sends an NDP Announcement (NDPA) frame towards the STAs to start the procedure. The master AP is an AP designated to initiate the sounding procedure. The master AP then sends a first NDP frame (shown as NDP1). After this, the other slave APs sequentially send their NDP frames serially towards the STAs. In the present illustrated embodiment, Slave AP 1 sends a second NDP frame NDP2, and then another Slave AP 2 sends a third NDP frame NDP3. Next, the master AP sends a trigger frame that signals to the STAs to feed back their CSI beamforming report(s). As each STA receives an NDP from each AP in sequence, serial sounding allows each STA to estimate the channel to each individual AP without influences from other APs.

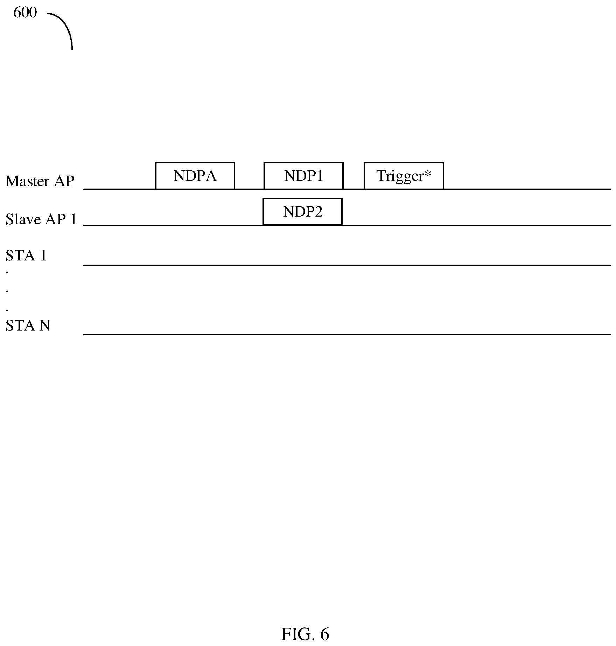

FIG. 6 illustrates a first concurrent sounding procedure **600** according to an embodiment. A master AP sends an NDPA frame towards the STAs to start the procedure. Then both master and slave APs simultaneously send NDP frames towards the STAs. Next, the master AP sends the trigger frame that signals to the STAs to feed back their CSI beamforming report(s). Additional slave APs may also participate in this sounding procedure, by sending their respective NDP frames concurrently with NDP1 and NDP2.

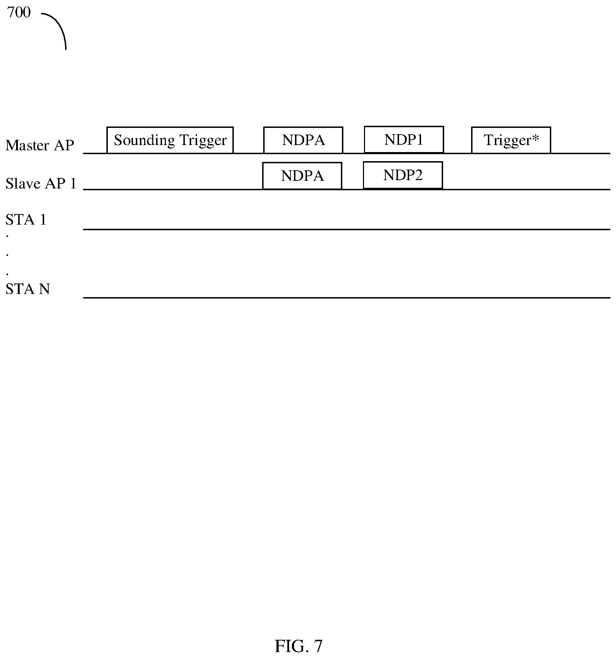

FIG. 7 illustrates a second concurrent sounding procedure **700** according to an embodiment. A master AP sends a Sounding Trigger frame towards the STAs to start the procedure. Then both master and slave APs simultaneously send NDPA frames towards the STAs. Following this, both master and slave APs simultaneously send NDP frames towards the STAs. Next, the master AP sends the trigger frame that signals to the STAs to feedback their CSI beamforming report(s). Additional slave APs may also participate in this sounding procedure, by sending their respective NDP frames concurrently with NDPA, NDP1 and NDP2.

Returning to FIG. 3, the figure illustrates two APs performing multi-AP collaboration with each of two STAs. AP1 **204** has $N_1$ Tx antennas. AP2 **206** has $N_2$ Tx antennas. STA1 **304** has $M_1$ Rx antennas. STA2 **306** has $M_2$ Rx antennas. During the sounding process, STA1 **304** needs to estimate the $H_{M_1 X N_1}^{11}$ and $H_{M_1 X N_2}^{12}$ CSI based on NDP frames received from transmitters in AP1 **204** and AP2 **206** for channels **308** and **310**. Similarly, STA2 **306** needs to estimate the $H_{M_2 X N_1}^{21}$ and $H_{M_2 X N_2}^{22}$ CSI based on NDP frames received from transmitters in AP1 **204** and AP2 **206** for channels **312** and **314.** The letter for matrix H is used to refer to the raw channel data as estimated by STA1 **304** and STA2 **306** as part of the sounding procedure which may include a gain and phase of the received signals. The sounding procedure may be, but is not limited to, one of the procedures illustrated in figures 5, 6, or 7. $H_{AxB}^{xy}$ is a matrix of size $A{\times}B$ representing raw channel data between STA$x$ and AP$y$. AP1 **204** may transmit $K_1$ streams, and AP2 **206** may transmit $K_2$ streams, where $K_1$ is less than or equal to $M_1$, and $K_2$ is less than or equal to $M_2$. $M_1$ and $M_2$ are typically less than or equal to $N_1$ or $N_2$.

It is impractical for STAs to transmit the raw data H matrix back to the APs. In embodiments, channel information related to the matrix H may be fed back to the APs based on eigenvalues and a right eigen matrix by decomposing H into the form $U\Sigma V^H$ using singular value decomposition (SVD) techniques where $U$ is the left eigen matrix, $\Sigma$ is the eigenvalue matrix, and $V^H$ is the right eigen matrix. When H has dimension K×N, U will have dimension K×K, $\Sigma$ will have dimension K×N, and $V^H$ will have dimension N×N. When written in SVD format, it is sufficient, for practical purposes, for only the $\Sigma V^H$ information to be fed back without the unitary matrix, U. Given the $\Sigma$ and $V^H$ data, H can then be reconstructed by APs. Superscript $H$ refers to the Hermitian transpose (i.e. conjugate transpose) matrix operation.

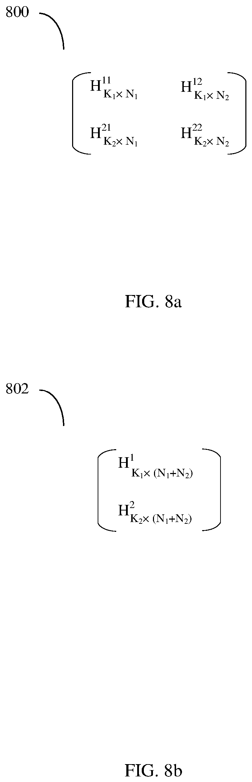

The precoder for the APs may be computed either by a master AP, which may be AP1 **204** or AP2 **206,** or by both AP1 **204** and AP2 **206.** When using multi-AP cooperation, in order to compute the precoder for the Coordinated Beamforming (CBF) or the joint transmission (JT), all four channel states, $H_{M_1 X N_1}^{11}$ **308**, $H_{M_1 X N_2}^{12}$ **310**, $H_{M_2 X N_1}^{21}$ **312** and $H_{M_2 X N_2}^{22}$ **314** need to be aggregated in each AP for the actual stream sizes, $K_1$ and $K_2$. FIG. 8a illustrates an aggregated matrix **800** to be reconstructed at the master AP or individual APs so that the precoder may be computed for the CBF case. FIG. 8b illustrates an aggregated matrix **802** to be reconstructed at the master AP or individual APs so that the precoder may be computed for the JT case. In embodiments, APs (master AP or individual APs) compute the precoder from the reconstructed channel matrix 800 or 802 based only on the fed-back eigenvalues, $\Sigma$, and Right eigen matrix, $V^H$, of the SVD form of H.

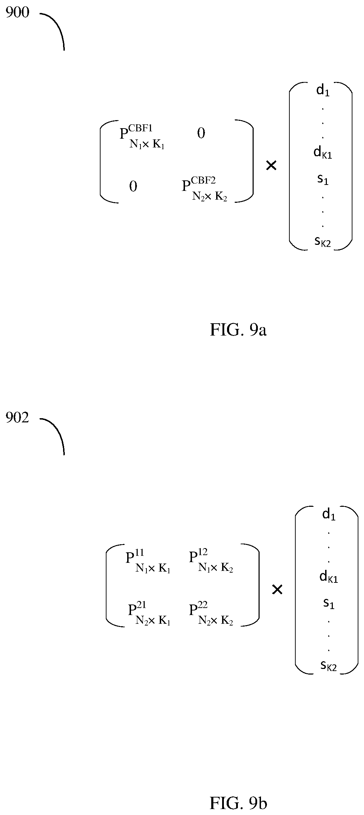

As illustrated in FIG. 9a, in embodiments using Coordinated Beamforming (CBF) where STA1 **304** and STA2 **306** communicate with AP1 **204,** only the $H_{K_1 X N_1}^{11}$ **308** and $H_{K_2 X N_1}^{21}$ **312** channels are aggregated in AP1 **204** and its Pseudo-Inverse is taken for a Zero-forcing Beamforming type of precoder. This results in a precoder 900 of dimension, $N_1{\times}(K_1+K_2)$, only the first $K_1$ columns of which are used for the CB precoder in AP1 **204.** In the same way, in embodiments where AP2 **206** aggregates channels and takes the Pseudo-Inverse of the aggregated channel whose dimension is $N_2{\times}(K_1+K_2)$, only the last $K_2$ columns of which are used for the CB precoder of AP2 **206.** In FIG. 9a, $P^{CBF1}$ can be computed with pseudo-inverse of $H^{11}$ and $H^{21}$ and taking the first $K_1$ columns. $P^{CBE2}$ can be computed with pseudo-inverse of $H^{11}$ and $H^{21}$ and taking the last $K_2$ columns.

The channel matrix in each AP is reconstructed based on the fed-back eigenvalues, $\Sigma$, and the Right eigen matrix, $V^H$, without the Left eigen matrix, U. When these CSI values are aggregated (e.g., concatenated into a single H matrix), the U, $\Sigma$ and $V^H$ can be thought of as being separately aggregated from the U, $\Sigma$ and $V^H$ of each channel individually. Because U is a unitary matrix containing phase information, this can be regarded as a type of carrier frequency offset (CFO) and can be neglected without impacting the overall Multi user-MIMO (MU-MIMO) performance of the CB. In other embodiments, the same principle can be applied to a single AP based downlink MU-MIMO.

In embodiments using Joint Transmission (JT), the channels to be aggregated are not limited to the columns in the matrix **800,** but are also aggregated by the rows of the matrix **800.** In these embodiments, the U matrix is not ignored when the channels are aggregated in rows of the matrix **800.** That is, in case the channels $H_{K_1 X N_1}^{11}$ **308** and $H_{K_1 X N_2}^{12}$ **310** are aggregated, U, $\Sigma$ and $V^H$ cannot be aggregated separately to compute the precoder for JT, and thus we cannot let the feedback to be transmitted for each $H_{K_1 X N_1}^{11}$ **308**, $H_{K_1 X N_2}^{12}$ **310**, $H_{K_2 X N_1}^{21}$ **312**, $H_{K_2 X N_2}^{22}$ **314** individually. FIG. 9b illustrates the precoder matrix for embodiments using JT.

In embodiments, the CSI information for individual channels may be transmitted between an individual STA and an individual AP separately when using multi-AP collaboration based on CBF or a single AP based DL MU-MIMO. However, for embodiments using multi-AP collaboration based on JT, the channels between each STA and collaborating APs must be aggregated in each STA first before computing the SVD and calculating CSI information. For sounding procedures as shown in FIGs. 5, 6, and 7, and other appropriate methods, each STA needs to aggregate the estimated channels between the STA and all the APs in the multi-AP collaboration. The STA may then calculate the SVD for the aggregated channels to compute the CSI information to feedback to the APs.

Referring to FIG. 3, STA1 **304** and STA2 **306** should aggregate the estimated channels as in the matrix **802** of FIG. 8b, where $H_{K_1 X (N_1+N_2)}^{1}$ is aggregated in STA1 **304** and $H_{K_2 X (N_1+N_2)}^{2}$ is aggregated in STA2 **306** before each STA computes the CSI information for feedback.

The matrix **802** may be reconstructed in the master AP based on the fed back CSI information for the $H^1_{K_1 X (N_1 + N_2)}$ and $H^2_{K_2 X (N_1 + N_2)}$ channels from both STA1 **304** and STA2 **306.**

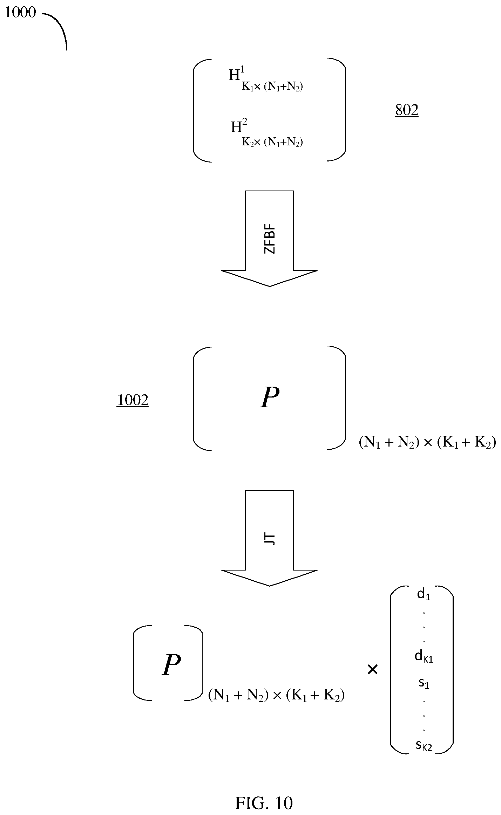

Referring to FIG. 10, in matrix **802,** the superscript x represents the STA index, that is, the $H^x$ is the estimated channel estimated and aggregated in STAx. The subscript is the size of the channel. The pseudo-inverse of the matrix **802** is used to compute the zero-forcing beamforming (ZFBF) based precoder matrix **1002** in the master AP. The channel $H^1_{K_1 X (N_1 + N_2)}$ and $H^2_{K_2 X (N_1 + N_2)}$ can be estimated using a P-matrix based Concurrent NDP Sounding without the aggregation of the estimated channels. In other embodiments, concurrent NDP Sounding based on Interleaved Tone based long training field (LTF) may require channel aggregation similar to the serial sounding cases described herein.

In embodiments of the present invention, a STA performs channel aggregation prior to computation of the singular value decomposition matrices Σ and V. The singular value decomposition matrices Σ and V are then fed back by the STA to one or more APs. This approach is performed in particular when joint transmission (rather than coordinated beamforming) is being implemented by APs for communication. In some embodiments, the STA is configured to determine whether joint transmission is being implemented for communication. When joint transmission is being implemented by multiple APs together, the STA is further configured to perform channel aggregation prior to computation and feedback of the singular value decomposition matrices Σ and V. That is, the estimated channel between a STA and all the APs operating together in collaboration mode can be aggregated in each STA before the CSI is fed back for the joint transmission (JT) schedule. The STA thus estimates the channel between itself and all the collaborating APs in combination. Then SVD is performed on this aggregated channel. When joint transmission is not being implemented (e.g. when coordinated beamforming is being implemented), the STA is configured to perform a different procedure. For example, the STA may be configured to compute and feedback singular value decomposition matrices without channel aggregation. That is, the estimated channel between each STA and each AP can be fed back without aggregation in each STA for the coordinated beamforming schedule.

For the joint transmission case, the aggregated channel matrix can be represented as:

$$H_{agg} = [H_a \ H_b] = [U_a \textstyle\sum_a V_a^H \ U_b \textstyle\sum_b V_b^H]$$

, where *a* and *b* refer to different channels.

In various embodiments, the channels between one AP in collaboration mode and all the scheduled STAs in AP collaboration may be reconstructed together in the AP to compute a ZFBF based precoder computation for the coordinated beamforming (CB) schedule.

In various embodiments, all the channels between all the APs and all the scheduled STAs in collaboration mode may be reconstructed together in an AP to compute the joint transmission (JT) schedule.

In accordance with embodiments of the present invention, there is provided a method for determining channel state information (CSI) of a wireless channel by a STA. The method includes receiving a plurality of sounding data transmissions from a plurality of APs over a plurality of communication channels. Estimating, for each of the communication channels, a channel state information (CSI) of the channel based on plurality of sounding data transmissions received over each of the communication channels. Aggregating the channel information of each of the communication channels to produce an aggregated CSI, and transmitting the aggregated CSI to the plurality of APs.

As used herein, the term "about" should be read as including variation from the nominal value, for example, a +/-10% variation from the nominal value. It is to be understood that such a variation is always included in a given value provided herein, whether or not it is specifically referred to.

Unless defined otherwise, all technical and scientific terms used herein have the same meaning as commonly understood by one of ordinary skill in the art to which this invention belongs.

Through the descriptions of the preceding embodiments, the present invention may be implemented by using hardware only or by using software and a necessary universal hardware platform. Based on such understandings, the technical solution of the present invention may be embodied in the form of a software product. The software product may be stored in a non-volatile or non-transitory storage medium, which can be a compact disk read-only memory (CD-ROM), USB flash disk, or a removable hard disk. The software product includes a number of instructions that enable a computer device (personal computer, server, or network device) to execute the methods provided in the embodiments of the present invention. For example, such an execution may correspond to a simulation of the logical operations as described herein. The software product may additionally or alternatively include number of instructions that enable a computer device to execute operations for configuring or programming a digital logic apparatus in accordance with embodiments of the present invention.

Although the present invention has been described with reference to specific features and embodiments thereof, it is evident that various modifications and combinations can be made thereto without departing from the invention. The specification and drawings are, accordingly, to be regarded simply as an illustration of the invention as defined by the appended claims, and are contemplated to cover any and all modifications, variations, combinations or equivalents.

**Claims**

1. A method for determining channel state information (CSI) of a wireless channel by a station (STA) (304), the method comprising:

   receiving a plurality of sounding data transmissions from a plurality of access points (APs) (204, 206) over a plurality of communication channels (308, 310);
   estimating, for each of the plurality of communication channels, a CSI of the channel based on the plurality of sounding data transmissions;

   aggregating the CSI of each of the communication channels to produce an aggregated CSI, and transmitting the aggregated CSI to the plurality of APs, by:

   aggregating the plurality of communication channels to produce an aggregated channel having an aggregated channel matrix (802);
   performing singular value decomposition on the aggregated channel matrix, by decomposing the aggregated channel matrix into $U\Sigma V^H$, wherein superscript H refers to the Hermitian transpose matrix operation, to produce a $\Sigma$ matrix and a V matrix of the aggregated channel; and
   **characterized by**
   transmitting the $\Sigma$ matrix and the V matrix to the plurality of APs.

2. The method as claimed in claim 1 wherein the plurality of sounding data transmissions are received serially.

3. The method as claimed in claim 1 wherein the plurality of sounding data transmissions are received concurrently.

4. The method as claimed in any of claims 1 to 3 wherein the aggregated channel matrix includes a measured gain and a measured phase of the plurality of sounding data transmissions.

5. The method as claimed in any of claims 1 to 4 wherein the plurality of communication channels use an 802.11 WiFi protocol.

6. The method as claimed in claim 5 wherein the 802.11 protocol includes multiple-input multiple-output (MIMO) protocols.

7. The method as claimed in any of claims 1 to 6 further comprising determining that joint transmission is used by the plurality of APs over the plurality of communication channels.

8. A station (STA) (304) for communicating over a communications channel, the STA comprising:

   a processor (110) and a non-transient memory (130) for storing instructions which when executed by the processor cause the STA to:
   receive a plurality of sounding data transmissions from a plurality of access points (APs) (204,206) over a plurality of communication channels (308,310);
   estimate, for each of the plurality of communication channels, a CSI of the channel based on the plurality of sounding data transmissions;

   aggregate the CSI of each of the communication channels to produce an aggregated CSI, and transmit the aggregated CSI to the plurality of APs, by:

   aggregating the plurality of communication channels to produce an aggregated channel having an aggregated channel matrix (802);
   performing singular value decomposition on the aggregated channel matrix, by decomposing the aggregated channel matrix into $U\Sigma V^H$, wherein superscript H refers to the Hermitian transpose matrix operation, to produce a $\Sigma$ matrix and a V matrix of the aggregated channel; and
   **characterized by**
   transmitting the $\Sigma$ matrix and the V matrix of the aggregated channel to the plurality of APs.

9. The station as claimed in claim 8 wherein the plurality of sounding data transmissions are received serially.

10. The station as claimed in claim 8 wherein the plurality of sounding data transmissions are received concurrently.

11. The station as claimed in any of claims 8 to claim 10 wherein the aggregated matrix includes a measured gain and a measured phase of the plurality of sounding data transmissions.

12. The station as claimed in any of claims 8 to 11 wherein the plurality of communication channels use an 802.11 WiFi protocol.

13. The station as claimed in claim 12 wherein the 802.11 protocol includes multiple-input multiple-output (MIMO) protocols.

14. The station as claimed in any of claims 8 to 13, wherein the instructions when executed by the processor cause the STA to further determine that joint transmission is used by the plurality of APs over the plurality of communication channels.

**Patentansprüche**

1. Verfahren zum Bestimmen von Kanalzustandsinformationen, CSI, eines drahtlosen Kanals durch eine Station, STA, (304), wobei das Verfahren Folgendes umfasst:

   Empfangen einer Vielzahl von Sondierungsdatenübertragungen von einer Vielzahl von Zugriffspunkten, APs, (204, 206) über eine Vielzahl von Kommunikationskanälen (308, 310);
   Schätzen, für jeden der Vielzahl von Kommunikationskanälen, einer CSI des Kanals basierend auf der Vielzahl von Sondierungsdatenübertragungen;
   Aggregieren der CSI jedes der Kommunikationskanäle, um eine aggregierte CSI hervorzubringen, und Übertragen der aggregierten CSI an die Vielzahl von APs durch:

   Aggregieren der Vielzahl von Kommunikationskanälen, um einen aggregierten Kanal hervorzubringen, der eine aggregierte Kanalmatrix (802) aufweist;
   Durchführen einer Singulärwertzerlegung an der aggregierten Kanalmatrix durch Zerlegen der aggregierten Kanalmatrix in $U\Sigma V^H$, wobei sich das hochgestellte H auf die hermitesche Transponiertenmatrixoperation bezieht, um eine $\Sigma$-Matrix und eine V-Matrix des aggregierten Kanals hervorzubringen;
   und **gekennzeichnet durch**
   Übertragen der $\Sigma$-Matrix und der V-Matrix an die Vielzahl von APs.

2. Verfahren nach Anspruch 1, wobei die Vielzahl von Sondierungsdatenübertragungen seriell empfangen wird.

3. Verfahren nach Anspruch 1, wobei die Vielzahl von Sondierungsdatenübertragungen zeitgleich empfangen wird.

4. Verfahren nach einem der Ansprüche 1 bis 3, wobei die aggregierte Kanalmatrix eine gemessene Verstärkung und eine gemessene Phase der Vielzahl von Sondierungsdatenübertragungen beinhaltet.

5. Verfahren nach einem der Ansprüche 1 bis 4, wobei die Vielzahl von Kommunikationskanälen ein 802.11-WLAN-Protokoll verwendet.

6. Verfahren nach Anspruch 5, wobei das 802.11-Protokoll Multiple-Input-Multiple-Output-Protokolle, MIMO-Protokolle, beinhaltet.

7. Verfahren nach einem der Ansprüche 1 bis 6, ferner umfassend Bestimmen, dass gemeinsame Übertragung durch die Vielzahl von APs über die Vielzahl von Kommunikationskanälen verwendet wird.

8. Station, STA, (304) zum Kommunizieren über einen Kommunikationskanal, wobei die STA Folgendes umfasst:
   einen Prozessor (110) und einen nichtflüchtigen Speicher (130) zum Speichern von Anweisungen, die, wenn sie durch den Prozessor ausgeführt werden, die STA zu Folgendem veranlassen:

   Empfangen einer Vielzahl von Sondierungsdatenübertragungen von einer Vielzahl von Zugriffspunkten, APs, (204, 206) über eine Vielzahl von Kommunikationskanälen (308, 310);
   Schätzen, für jeden der Vielzahl von Kommunikationskanälen, einer CSI des Kanals basierend auf der Vielzahl von Sondierungsdatenübertragungen;
   Aggregieren der CSI jedes der Kommunikationskanäle, um eine aggregierte CSI hervorzubringen, und Übertragen der aggregierten CSI an die Vielzahl von APs durch:

   Aggregieren der Vielzahl von Kommunikationskanälen, um einen aggregierten Kanal hervorzubringen, der eine aggregierte Kanalmatrix (802) aufweist;
   Durchführen einer Singulärwertzerlegung an der aggregierten Kanalmatrix durch Zerlegen der aggregierten Kanalmatrix in $U\Sigma V^H$, wobei sich das hochgestellte H auf die hermitesche Transponiertenmatrixoperation bezieht, um eine $\Sigma$-Matrix und eine V-Matrix des aggregierten Kanals hervorzubringen;
   und **gekennzeichnet durch**
   Übertragen der $\Sigma$-Matrix und der V-Matrix des aggregierten Kanals an die Vielzahl von APs.

9. Station nach Anspruch 8, wobei die Vielzahl von Sondierungsdatenübertragungen seriell empfangen wird.

10. Station nach Anspruch 8, wobei die Vielzahl von Sondierungsdatenübertragungen zeitgleich empfangen wird.

11. Station nach einem der Ansprüche 8 bis 10, wobei die aggregierte Matrix eine gemessene Verstärkung und eine gemessene Phase der Vielzahl von Sondierungsdatenübertragungen beinhaltet.

12. Station nach einem der Ansprüche 8 bis 11, wobei die Vielzahl von Kommunikationskanälen ein 802.11-WLAN-Protokoll verwendet.

**13.** Station nach Anspruch 12, wobei das 802.11-Protokoll Multiple-Input-Multiple-Output-Protokolle, MIMO-Protokolle, beinhaltet.

**14.** Station nach einem der Ansprüche 8 bis 13, wobei die Anweisungen, wenn sie durch den Prozessor ausgeführt werden, die STA dazu veranlassen, ferner zu bestimmen, dass gemeinsame Übertragung durch die Vielzahl von APs über die Vielzahl von Kommunikationskanälen verwendet wird.

**Revendications**

**1.** Procédé de détermination d'informations d'état de canal (CSI) d'un canal sans fil par une station (STA) (304), le procédé comprenant :

la réception d'une pluralité de transmissions de données de sondage à partir d'une pluralité de points d'accès (AP) (204, 206) sur une pluralité de canaux de communication (308, 310) ;
l'estimation, pour chacun de la pluralité de canaux de communication, de CSI du canal sur la base de la pluralité de transmissions de données de sondage ;
le fait d'agréger les CSI de chacun des canaux de communication pour produire des CSI agrégées, et transmettre les CSI agrégées à la pluralité d'AP, en :

agrégeant la pluralité de canaux de communication pour produire un canal agrégé ayant une matrice de canaux agrégés (802) ;
réalisant une décomposition de valeur singulière sur la matrice de canaux agrégés, en décomposant la matrice de canaux agrégés en $U\Sigma V^H$, où l'exposant H fait référence à l'opération de matrice de transposition hermitienne, pour produire une matrice $\Sigma$ et une matrice V du canal agrégé ;
et **caractérisé par**
la transmission de la matrice $\Sigma$ et de la matrice V à la pluralité d'AP.

**2.** Procédé selon la revendication 1, dans lequel la pluralité de transmissions de données de sondage sont reçues en série.

**3.** Procédé selon la revendication 1, dans lequel la pluralité de transmissions de données de sondage sont reçues simultanément.

**4.** Procédé selon l'une quelconque des revendications 1 à 3, dans lequel la matrice de canaux agrégés comporte un gain mesuré et une phase mesurée de la pluralité de transmissions de données de sondage.

**5.** Procédé selon l'une quelconque des revendications 1 à 4, dans lequel la pluralité de canaux de communication utilise un protocole WiFi 802.11.

**6.** Procédé selon la revendication 5, dans lequel le protocole 802.11 comporte des protocoles à entrées multiples et sorties multiples (MIMO).

**7.** Procédé selon l'une quelconque des revendications 1 à 6, comprenant également le fait de déterminer qu'une transmission conjointe est utilisée par la pluralité d'AP sur la pluralité de canaux de communication.

**8.** Station (STA) (304) pour communiquer sur un canal de communication, la STA comprenant :
un processeur (110) et une mémoire non transitoire (130) pour stocker des instructions qui, lorsqu'elles sont exécutées par le processeur, amènent la STA à :

recevoir une pluralité de transmissions de données de sondage à partir d'une pluralité de points d'accès (AP) (204, 206) sur une pluralité de canaux de communication (308, 310) ;
estimer, pour chacun de la pluralité de canaux de communication, des CSI du canal sur la base de la pluralité de transmissions de données de sondage ;
agréger les CSI de chacun des canaux de communication pour produire des CSI agrégées, et transmettre les CSI agrégées à la pluralité d'AP, en :

agrégeant la pluralité de canaux de communication pour produire un canal agrégé ayant une matrice de canaux agrégés (802) ;
réalisant une décomposition de valeur singulière sur la matrice de canaux agrégés, en décomposant la matrice de canaux agrégés en $U\Sigma V^H$, où l'exposant H fait référence à l'opération de matrice de transposition hermitienne, pour produire une matrice $\Sigma$ et une matrice V du canal agrégé ;
et **caractérisé par**
la transmission de la matrice $\Sigma$ et de la matrice V du canal agrégé à la pluralité d'AP.

**9.** Station selon la revendication 8, dans laquelle la pluralité de transmissions de données de sondage sont reçues en série.

**10.** Station selon la revendication 8, dans laquelle la pluralité de transmissions de données de sondage sont reçues simultanément.

**11.** Station selon l'une quelconque des revendications 8 à 10, dans laquelle la matrice de canaux agrégés comporte un gain mesuré et une phase mesurée de la pluralité de transmissions de données de sondage.

**12.** Station selon l'une quelconque des revendications 8 à 11, dans laquelle la pluralité de canaux de communication utilise un protocole WiFi 802.11.

**13.** Station selon la revendication 12, dans laquelle le protocole 802.11 comporte des protocoles à entrées multiples et sorties multiples (MIMO).

**14.** Station selon l'une quelconque des revendications 8 à 13, dans laquelle les instructions, lorsqu'elles sont exécutées par le processeur, amènent la STA à déterminer également que la transmission conjointe est utilisée par la pluralité d'AP sur la pluralité de canaux de communication.

100

PROCESSOR
110

MASS
STORAGE
130

NETWORK
INTERFACE(S)
150

RADIO ACCESS
NETWORK
INTERFACE(S)
190

NETWORKS
102

CELLULAR
NETWORKS
104

MEMORY
120

VIDEO
ADAPTER
140

I/O
INTERFACE
160

DISPLAY
170

I/O DEVICE(S)
180

FIG. 1

200

Internet
202

$K_1$

AP
204

$K_2$

AP
206

• • •

$K_L$

AP
208

Tx1  Tx2  ⋯  Tx $N_1$

Tx1  Tx2  ⋯  Tx $N_2$

Tx1  Tx2  ⋯  Tx $N_L$

• • •

212

214

210

FIG. 2

300

Internet
202

$K_1$

$K_2$

AP1
204

AP2
206

Tx1  Tx2  ⋯  Tx $N_1$

312

Tx1  Tx2  ⋯  Tx $N_2$

$H^{21}_{M_2 \times N_1}$

$H^{11}_{M_1 \times N_1}$

$H^{22}_{M_2 \times N_2}$

308

314

310

$H^{12}_{M_1 \times N_2}$

Rx1  Rx2  ⋯  Rx $M_1$

Rx1  Rx2  ⋯  Rx $M_2$

STA1
304

STA2
306

FIG. 3

Internet
202

$K_1$

AP1
204

Tx1   Tx2   ⋯   Tx $N_1$

$K_2$

AP2
206

Tx1   Tx2   ⋯   Tx $N_2$

$H^1_{M_1 \times (N_1+N2)}$

402

$H^2_{M_2 \times (N_1+N_2)}$

404

Rx1   Rx2   ⋯   Rx $M_1$

STA1
304

Rx1   Rx2   ⋯   Rx $M_2$

STA2
306

FIG. 4

500

Master AP ____ | NDPA | | NDP1 | _____ | Trigger* | ___

Slave AP 1 _____ | NDP2 | _____

Slave AP 2 _____ | NDP3 | _____

STA 1 _____
.
.
.
STA N _____

FIG. 5

600

| Master AP | NDPA | NDP1 | Trigger* |
| Slave AP 1 | | NDP2 | |
| STA 1 | | | |
.
.
.
| STA N | | | |

FIG. 6

700

| Master AP | Sounding Trigger | | NDPA | NDP1 | Trigger* |
| Slave AP 1 | | | NDPA | NDP2 | |
| STA 1 | | | | | |
| . | | | | | |
| . | | | | | |
| . | | | | | |
| STA N | | | | | |

FIG. 7

800

$$\begin{bmatrix} H^{11}_{K_1 \times N_1} & H^{12}_{K_1 \times N_2} \\ H^{21}_{K_2 \times N_1} & H^{22}_{K_2 \times N_2} \end{bmatrix}$$

FIG. 8a

802

$$\begin{bmatrix} H^{1}_{K_1 \times (N_1+N_2)} \\ H^{2}_{K_2 \times (N_1+N_2)} \end{bmatrix}$$

FIG. 8b

900

$$\begin{bmatrix} P^{CBF1}_{N_1 \times K_1} & 0 \\ 0 & P^{CBF2}_{N_2 \times K_2} \end{bmatrix} \times \begin{bmatrix} d_1 \\ \cdot \\ \cdot \\ d_{K1} \\ s_1 \\ \cdot \\ \cdot \\ s_{K2} \end{bmatrix}$$

FIG. 9a

902

$$\begin{bmatrix} P^{11}_{N_1 \times K_1} & P^{12}_{N_1 \times K_2} \\ P^{21}_{N_2 \times K_1} & P^{22}_{N_2 \times K_2} \end{bmatrix} \times \begin{bmatrix} d_1 \\ \cdot \\ \cdot \\ d_{K1} \\ s_1 \\ \cdot \\ \cdot \\ s_{K2} \end{bmatrix}$$

FIG. 9b

1000

$$\begin{bmatrix} H^1_{K_1 \times (N_1 + N_2)} \\ \\ H^2_{K_2 \times (N_1 + N_2)} \end{bmatrix} \quad \underline{802}$$

↓ ZFBF

$$\underline{1002} \quad \begin{bmatrix} \boldsymbol{P} \end{bmatrix}_{(N_1 + N_2) \times (K_1 + K_2)}$$

↓ JT

$$\begin{bmatrix} \boldsymbol{P} \end{bmatrix}_{(N_1 + N_2) \times (K_1 + K_2)} \times \begin{bmatrix} d_1 \\ \cdot \\ \cdot \\ d_{K1} \\ s_1 \\ \cdot \\ \cdot \\ s_{K2} \end{bmatrix}$$

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012106384 A

**Non-patent literature cited in the description**

- **ALCATEL-LUCENT SHANGHAI BELL et al.** Weighted CSI Feedback aided DL CoMP transmissions. *3GPP Draft R1-093782*, 12 October 2009

- Consideration on Aggregated CSI Feedback. *3GPP Draft R1-113968*, 09 November 2011